# EUROPEAN PATENT SPECIFICATION

(11) **EP 3 718 760 B1**
(45) Date of publication and mention of the grant of the patent: **11.05.2022**
(21) Application number: 19461527.4
(22) Date of filing: 04.04.2019
(51) Int. Cl.: B32B 3/12, B32B 3/02, B32B 38/00, B32B 37/14, B32B 23/06, E04C 2/36

(54) **A HONEYCOMB STRUCTURE AND A METHOD FOR MANUFACTURING THEREOF**
WABENSTRUKTUR UND VERFAHREN ZUR HERSTELLUNG DAVON
STRUCTURE EN NID D'ABEILLE ET SON PROCÉDÉ DE FABRICATION

(43) Date of publication of application: 07.10.2020
(73) Proprietor: Wojcik, Grzegorz, 64-360 Zbaszyn (PL)
(72) Inventor: Wojcik, Grzegorz, 64-360 Zbaszyn (PL)
(74) Representative: Kancelaria Eupatent.pl Sp. z.o.o

(56) References cited:
- DE-A1- 4 237 025
- FR-A- 1 011 146
- US-A1- 2010 310 820

## Description

### TECHNICAL FIELD

The present invention relates to a honeycomb structure and a method for manufacturing thereof. In particular, the present invention relates improving adhesion of the flat outer layers to the edges of the core of the honeycomb structure.

### BACKGROUND OF THE INVENTION

Honeycomb structures are natural or man-made structures that have a geometry of a honeycomb to minimize the amount of used material in order to minimize its weight and overall material cost. The geometry of the honeycomb structures can vary widely, but a common feature of all such structures is an array of hollow cells formed between thin vertical walls. The cells are typically columnar and hexagonal in shape. A honeycomb shaped structure provides a material with a minimal density and a relatively high out-of-plane compression properties and out-of-plane shear properties.

Honeycomb structural materials are typically made by arranging a honeycomb core between two thin, flat cover layers, to form a plate-like assembly. Honeycomb materials are useful wherein flat or slightly curved surfaces having high specific strength are needed.

A publication of EP2243535B1, entitled "Honeycomb structure and bonded type honeycomb structure" discloses honeycomb structures were the shape of the outer peripheral wall was formed so that the portions conforming to the outer shapes of the first cells were formed into a convex shape and the portions conforming to the outer shapes of the second cells were formed into a concave shape. A bonded type honeycomb structure was produced, as previously described, except that the partition wall thickness of the honeycomb structures was equalized to 0.38 mm. This solution is aimed at providing convex honeycomb structure shapes, which are strictly conforming to given dimensions. A complete structure is processed, when ready, to equalize its thickness to a given value. This is not beneficial as it may weaken the honeycomb structure due to compression of the already adhesive-bonded joints. Although this publication takes additional steps to process the honeycomb structure, this processing does not result in improved adhesion and strength thereof.

Another prior art US20100095622A1, entitled "Vacuum insulation panel and method for the production thereof discloses that a honeycomb structure comprises hemispheres that are equal to each other could be arranged on one side in a plane in the same orientation. A second layer of hemispheres that are equal, in turn, to each other and to the hemispheres of the first layer could then be arranged on top, so that a hemisphere of the first layer and a hemisphere of the second layer contact at exactly one point. The cover layers are attached to the open sides of the hemispheres. According to US20100095622A1, two opposing and equal layers of hemispheres are joined together at the tips of said hemispheres. Nevertheless, precise joining a plane having thousands of touch points (tips of said hemispheres) is a nearly impossible task. Even if possible, it would require different materials and high cost, which is not acceptable in staple articles such as packaging materials.

A publication DE4237025 discloses that for the manufacture of a sandwich panel, a core is formed from strips of fibre-containing material such as cardboard or paper, the breadthwise direction of which strips coincides with the thickness direction of the panel, and a covering sheet is subsequently bonded to each of the longitudinal sides of the core.

A publication FR1011146 discloses improvements made to panels for construction, in arranging the panels such a way that the edges of the cellular elements are folded down, so as to facilitate fixing on the plates of said panels.

The aim of the present invention is to provide an improved, in terms of strength and costs of manufacture, honeycomb structure and a method for manufacturing thereof.

### SUMMARY

There is disclosed a method for manufacturing a honeycomb structure and a honeycomb structure according to the appended claims.

### BRIEF DESCRIPTION OF THE DRAWINGS

These and other objects of the invention presented herein, are accomplished by providing a honeycomb structure and a method for manufacturing thereof. Further details and features of the present invention, its nature and various advantages will become more apparent from the following detailed description of the preferred embodiments shown in a drawing, in which:
Figs. 1A, 1B show a typical honeycomb core comprising a plurality of hexagonal cells produced with a non-zero height tolerance, in a top view and side view, respectively;
Figs. 2A and 2B show schematically a difference between a prior art honeycomb core and a calibrated honeycomb core in a cross-sectional view;
Figs. 3A and 3B show photographs of a prior art honeycomb core and a calibrated honeycomb core in a cross-sectional view;
Figs. 3C and 3D show photographs of a prior art honeycomb core and a calibrated honeycomb core in a top view;
Figs. 4A and 4B show a calibrated honeycomb core in a top view and a side view, respectively;
Figs 5A and 5B show load-extension curves for a prior art honeycomb structure and a calibrated honeycomb structure, respectively;
Fig. 6 shows a diagram of the system according to the present invention;
Figs. 7A-7E examples of calibrating modules.

### DETAILED DESCRIPTION

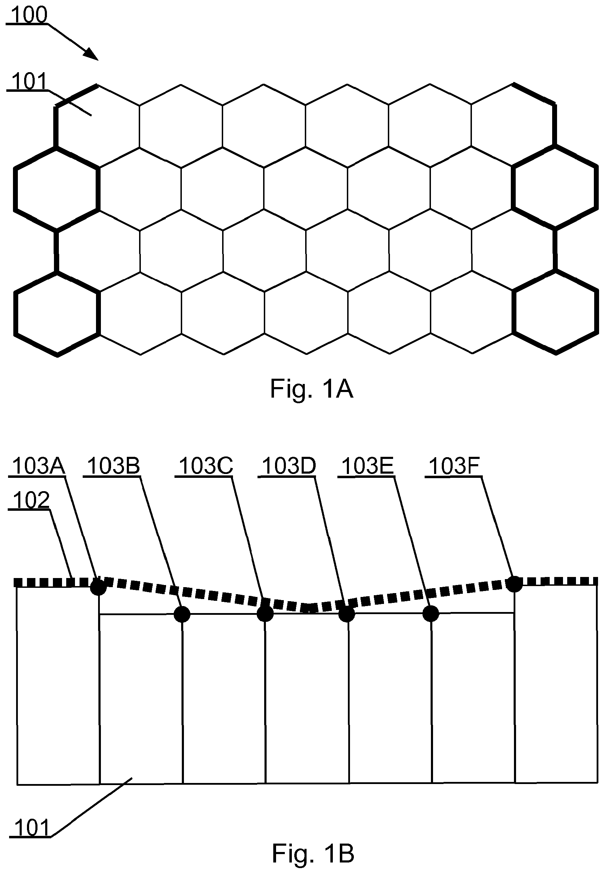

A common industrial tolerance for the thickness of honeycomb cores for cardboard products packaging is ±0,2 mm. This may lead to reduction of adhesion between the edges of the honeycomb core walls and the outer flat layers (cover layers) of the honeycomb structure. A 0,4 mm difference in the height of the neighboring cells may result in significant weakness in the area of the lowered. This is shown in Figs. 1A and 1B, wherein a typical honeycomb core 100 comprises a plurality of adjacent hexagonal cells 101 limited by walls which have the aforementioned height tolerance of ±0,2 mm.

When applying a cover layer 102, a plurality of touch points 103A-F are supposed to be formed at the edges of the honeycomb core cells that have been treated by application of an adhesive. As may be readily seen, a dent is created because the middle touch points 103B-E are lower than the outer touch points 103A and 103F.

In extreme cases, the surface of the cover layer 102 may not bond with the edges of the honeycomb core 100 walls if it will not touch the respective points 103B and 103E, which leads to a noticeable loss of strength in that section of the product. As a result, adhesive-bonded joints are not formed at points 103B-E, leading to a lower-quality product.

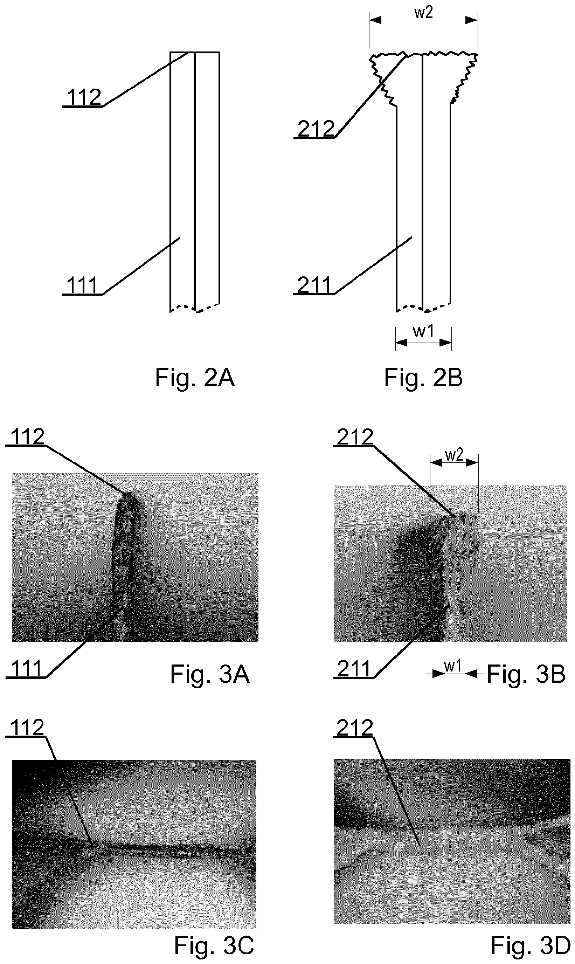

According to the present invention there is defined a calibrated honeycomb core 200 that allows a uniform adhesion of the edges of the honeycomb core 200 to the cover layer 202. Figs. 2A and 2B show schematically a difference between a wall structure of a prior art honeycomb core 100 (Fig. 2A) and a calibrated honeycomb core 200 (Fig. 2B).

The prior art honeycomb core 100 has walls 111 terminated by relatively straight edges 112. The non-calibrated honeycomb core 100 therefore provides a relatively (in comparison to the calibrated one) small joint area with the cover layer, which results in a weaker adhesive-bonded joint.

The calibrated honeycomb core 200 has at least some walls 211 terminated on at least one side thereof by flattened edges 212. The walls 211 have a cross-section that widens towards the edge 212, such that the edge 212 has a width w2 larger than the width w1 of the inner (i.e. non-edge) portion of the wall 211 (i.e. the nominal thickness of the wall, for example measured at the middle of the wall or an average thickness of the wall across its whole height excluding it's edge portions, e.g. excluding the top and bottom fragments of 10% of the height), preferably by at least 10%, or at least 20%, or at least 30%, or at least 40%, or at least 50%, or at least 60%, or at least 70%, or at least 80%, or at least 90%, or at least 100%. That widening results from the processing of the edges 212 of the wall 211 at the calibration stage. The structure of the paper may be broken (defibrated) at the region of the edge, especially due to processing by rough rollers. This allows to equalize the height of the honeycomb core and to increase the area of contact between the edges of the honeycomb core and the cover layer.

The calibrated honeycomb core 200 is made of paper, as well known in the art. The outer cover layers may be also made of paper or any other material as well known in the art.

Figs. 3A-3D present photographs of the prior art honeycomb core 100 (Fig. 3A, 3C) and the calibrated honeycomb core 200 (Fig. 3B, 3D) viewed in a cross-sectional view and from the top, showing the top edges of two adjacent cells. The non-calibrated, prior art honeycomb core 100 has relatively thin top edges 112. The calibrated honeycomb core 200 has much wider top edges 212, therefore the area that may form the adhesive-bonded joint is much larger.

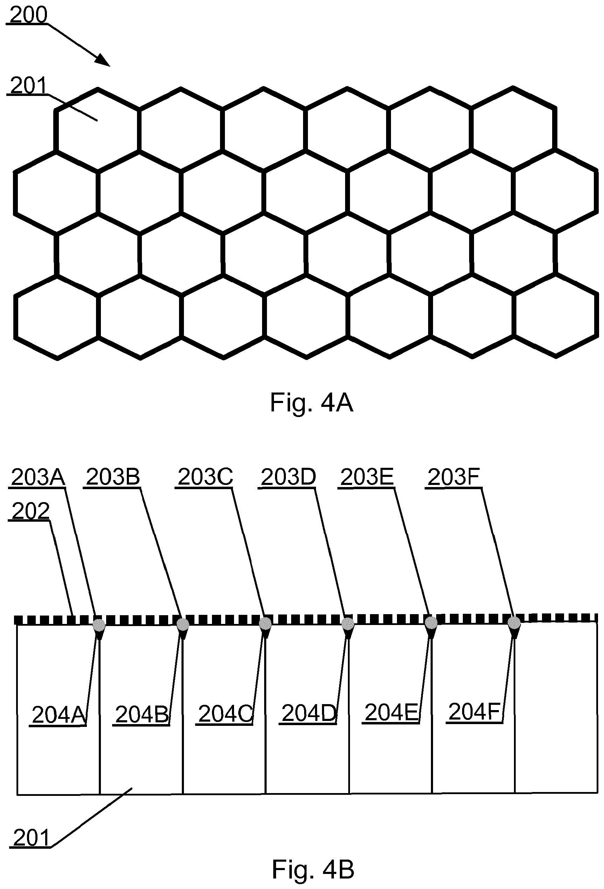

Figs. 4A and 4B presents the calibrated honeycomb core 200 according to the invention, wherein the edges of the honeycomb core are flattened and have a more uniform height. When applying a cover layer 202, a plurality of touch points 203A-F is created at points that have been treated by application of an adhesive. As may be readily seen in the figure, there is no dent for the calibrated honeycomb core 200, because all touch points 203A-F have been equalized to the same height. At the same time, the surface areas 204A-F that form the adhesive-bonded joint are increased. Consequently, adhesive-bonded joints are properly created at points 203B-E that lead to a higher-quality product.

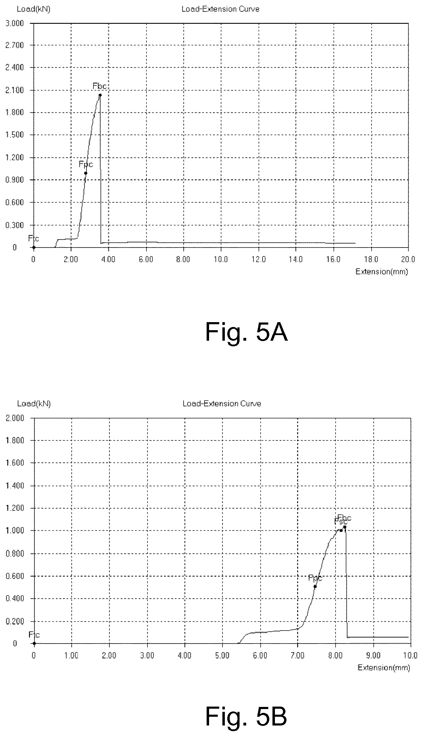

Consequently, manufacturing of the honeycomb structure with the calibrated honeycomb core 200 requires less adhesive to obtain the same strength. Further, paper of lower density may be used because the adhesive-bonded joints are much stronger and evenly formed. Figs 5A and 5B show load-extension curves for a calibrated honeycomb structure (Fig. 5A) and a prior art honeycomb structure (Fig. 5B), wherein the same paper was used for the core and cover layers. As shown in Fig. 5A, the critical point (Fbc) for the calibrated honeycomb structured was at extension of 3,8 mm and a force of 2,04 kN. As shown in Fig. 5B, the critical point (Fbc) for a prior art honeycomb structure was at extension of 8,3 mm and a force of 1,03 kN. Therefore, the calibration resulted in increase of strength of the honeycomb structure by about 100%.

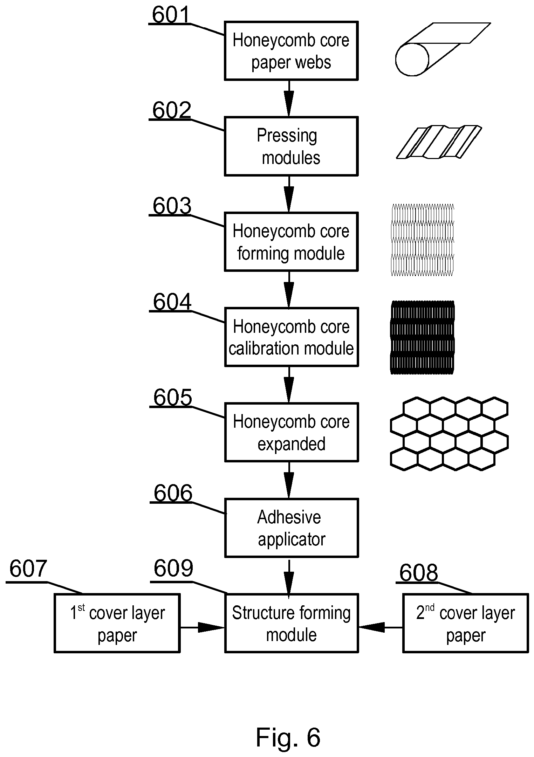

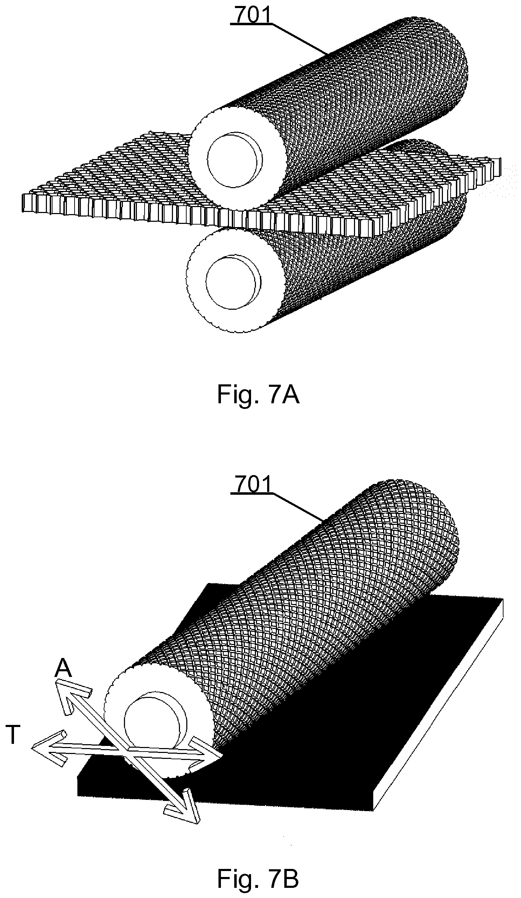

Fig. 6 presents a schematic of a system for forming the honeycomb structure. Honeycomb core paper 601 is provided from a plurality of webs. The paper from each web is cut into slices, which are covered by glue and pressed in pressing modules 602 and to be joined together to form a compressed honeycomb core in a honeycomb forming module 603. The compressed honeycomb core is then calibrated in a calibrating module 604, as shown in Figs. 7A-7E. Next, in an extender 605, the calibrated compressed honeycomb core is extended to its regular form. Adhesive is applied to the external edges of the cells in module 606 and then cover layers from webs 607, 608 are joined with the calibrated honeycomb core in module 609. The modules 601, 602, 603, 605, 606, 607, 608, 609 can be standard modules known in the prior art.

In another embodiment of the system, the calibrating module 604 may be present after the extender 605, to process the extended honeycomb core.

The steps 602, 603 of forming the honeycomb core may be performed at another production facility than the steps of calibrating 604 the honeycomb core and/or forming the honeycomb structure. In other words, the step of calibrating 604 may be performed as a service offered outside the honeycomb core and/or the honeycomb structure production facility.

The calibrating module 604 processes the edges 212 of the honeycomb core 200 such as to equalize the height and to make them wider than the width of the walls 211. Consequently, the structure of the honeycomb walls 211 is broken (defibered) at their edges, thereby increasing the joint adhesion between the edges and the cover layers. Various processing techniques may be used to achieve this, such as grinding or hammering.

For example, as shown in Fig. 7A, the calibrating module may comprise calibrating rollers 701 with a rough outer surface, arranged at one or both sides of the honeycomb core. The calibrating rollers may have a surface with a roughtness from P12 to P120 according to FEPA (Federation of European Producers of Abrasives) grading.

As shown in Fig. 7B, the axis of rotation A of the calibrating rollers 701 may be set at an inclined angle with respect to the direction T of travel of the honeycomb core.

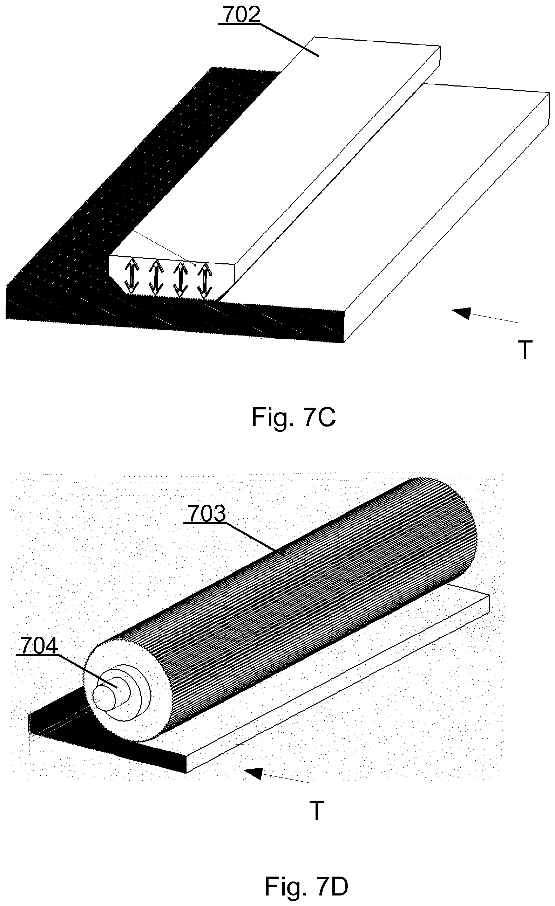

As shown in Fig. 7C, the calibrating module may comprise a vibrating hammer 702 that hits the edges of the honeycomb structure. For example, the vibration frequency may be from 20 to 50 Hz for a honeycomb structure moving with a speed selected such that each point at the edge is hit at least a few times as it passes below the vibrating hammer. One hammer 702 may be used or two hammers may be used at opposite sides of the honeycomb structure.

As shown in Fig. 7D, the calibrating module may comprise an eccentric calibrating roller 703 that is mounted on an eccentric shaft 704, so that during its rotation it provides both grinding and hammering action.

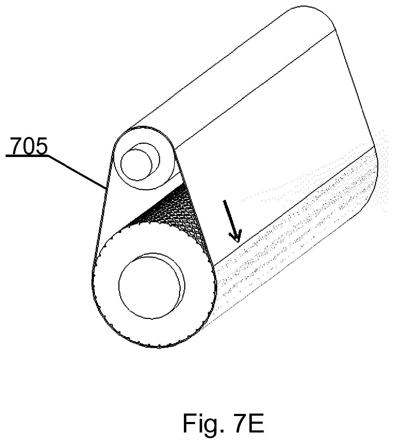

As shown in Fig. 7E, the calibrating module may comprise a vibrating roller 705 with a rough lining in place of the calibrating rollers 701 of Figs. 7A, 7B.

The vertical position of the calibrating module 604 is set such as to limit the average height of at least some of the walls of the honeycomb core. For example, it can be set such that its lowest operating point is positioned at the nominal height of the honeycomb core - in that case, only the edges of the walls that extended above that desired height will be calibrated (i.e. flattened and defibrated). Alternatively, the lowest operating point can be positioned below (for example 0,2 mm (i.e. the tolerance) below or even lower) the nominal height of the honeycomb core - such as to calibrate the edges of all walls of the honeycomb core (in such a case the honeycomb core can be formed in steps 602-603 to a height slightly higher than the desired height of the final core after the calibrating step).

Moreover, a plurality of the same or different calibrating modules 604 as shown in Figs. 7A-7E can be arranged in series to process the edges 212 of the honeycomb core 200 in successive stages.

While the invention presented herein has been depicted, described, and has been defined with reference to particular preferred embodiments, such references and examples of implementation in the foregoing specification do not imply any limitation on the invention. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for manufacturing a honeycomb structure, the method comprising:
- providing a paper honeycomb core (200) comprising a plurality of adjacent cells (201) formed between walls (211);
- applying adhesive (606) to edges (212) of the honeycomb core (200); and
- forming (609) the honeycomb structure by attaching a surface of at least one outer cover layer (202) to the edges (212) of the walls (211) of the honeycomb core (200);
**characterized in that** it further comprises:
- before forming (609) the honeycomb structure, calibrating (604) the honeycomb core (200) by processing at least some of the walls (212) of the honeycomb core (200) by defibrating at least some of the honeycomb walls (211) at their edges (212) such as to limit their height and increase the width (w2) of the edge (212) with respect to the width (w1) of the inner portion of the wall (211).

2. The method according to claim 1, comprising calibrating (604) the honeycomb core (200) prior to expanding (605) the honeycomb core (200).

3. The method according to claim 1, comprising calibrating (604) the honeycomb core (200) after expanding (605) the honeycomb core (200).

4. The method according to any of previous claims, wherein calibrating (604) the honeycomb core (200) comprises processing at least some of the edges (212) by rotating rough rollers (701).

5. The method according to any of previous claims, wherein calibrating (604) the honeycomb core (200) comprises processing at least some of the edges (212) by vibrating hammers (702).

6. The method according to any of previous claims, wherein calibrating (604) the honeycomb core (200) comprises processing at least some of the edges (212) by rotating and vibrating rough rollers (703).

7. The method according to any of previous claims, wherein calibrating (604) the honeycomb core (200) comprises processing at least some of the edges (212) by a vibrating roller (705) with a rotating rough lining.

8. A honeycomb structure comprising:
- a paper honeycomb core (200) comprising a plurality of adjacent cells (201) formed between walls (211); and
- at least one outer cover layer (202) having a surface bonded by adhesive with the edges (212) of the walls (211) of the honeycomb core (200);
**characterized in that**
- at least some of the walls (212) of the honeycomb core (200) have an edge (212) with a width (w2) greater than the width (w1) of the inner portion of the wall (211) and wherein the structure of the paper at the edge (212) of at least some of the walls (212) is defibrated.

## Patentansprüche

1. Verfahren zum Herstellen einer Wabenstruktur, wobei das Verfahren umfasst:
- Bereitstellen eines Papierwabenkerns (200), der mehrere benachbarte Zellen (201) umfasst, die zwischen Wänden (211) gebildet sind;
- Auftragen von Klebstoff (606) auf Rändern (212) des Wabenkerns (200); und
- Bilden (609) der Wabenstruktur durch Anbringen einer Oberfläche von mindestens einer äußeren Deckschicht (202) an den Rändern (212) der Wände (211) des Wabenkerns (200);
**dadurch gekennzeichnet, dass** es ferner umfasst:
- vor dem Bilden (609) der Wabenstruktur, Kalibrieren (604) des Wabenkerns (200) durch Bearbeiten zumindest einiger der Wände (212) des Wabenkerns (200) durch Zerfasern zumindest einiger der Wabenwände (211) an ihren Rändern (212), um ihre Höhe zu begrenzen und die Breite (w2) der Rands (212) in Bezug auf die Breite (w1) des inneren Abschnitts der Wand (211) zu vergrößern.

2. Verfahren nach Anspruch 1, umfassend das Kalibrieren (604) des Wabenkerns (200) vor dem Expandieren (605) des Wabenkerns (200).

3. Verfahren nach Anspruch 1, umfassend das Kalibrieren (604) des Wabenkerns (200) nach dem Expandieren (605) des Wabenkerns (200).

4. Verfahren nach einem der vorhergehenden Ansprüche, wobei das Kalibrieren (604) des Wabenkerns (200) das Bearbeiten von zumindest einigen der Ränder (212) durch Rotieren von rauen Walzen (701) umfasst.

5. Verfahren nach einem der vorhergehenden Ansprüche, wobei das Kalibrieren (604) des Wabenkerns (200) das Bearbeiten von zumindest einigen der Ränder (212) durch Vibriationshämmer (702) umfasst.

6. Verfahren nach einem der vorhergehenden Ansprüche, wobei das Kalibrieren (604) des Wabenkerns (200) das Bearbeiten von zumindest einigen der Ränder (212) durch Rotieren und Vibrieren von rauen Walzen (703) umfasst.

7. Verfahren nach einem der vorhergehenden Ansprüche, wobei das Kalibrieren (604) des Wabenkerns (200) das Bearbeiten von zumindest einigen der Ränder (212) durch eine vibrierende Walze (705) mit einer rotierenden rauen Auskleidung umfasst.

8. Wabenstruktur, umfassend:
- einen Papierwabenkern (200), der mehrere benachbarte Zellen (201) umfasst, die zwischen Wänden (211) gebildet sind; und
- mindestens eine äußere Deckschicht (202) mit einer Oberfläche, die durch Klebstoff mit den Rändern (212) der Wände (211) des Wabenkerns (200) verbunden ist;
**dadurch gekennzeichnet, dass**
- zumindest einige der Wände (212) des Wabenkerns (200) einen Rand (212) mit einer Breite (w2) aufweisen, die größer ist als die Breite (w1) des inneren Abschnitts der Wand (211), und wobei die Struktur des Papiers am Rand (212) von zumindest einigen der Wände (212) zerfasert ist.

## Revendications

1. Procédé permettant la fabrication d'une structure en nid d'abeilles, le procédé comprenant :
- la fourniture d'une âme en nid d'abeilles en papier (200) comprenant une pluralité de cellules adjacentes (201) formées entre des parois (211) ;
- l'application d'un adhésif (606) aux bords (212) de l'âme en nid d'abeilles (200) ; et
- la formation (609) de la structure en nid d'abeilles en fixant une surface d'au moins une couche de recouvrement externe (202) aux bords (212) des parois (211) de l'âme en nid d'abeilles (200) ;
**caractérisé en ce qu'**il comprend en outre :
- avant la formation (609) de la structure en nid d'abeilles, l'étalonnage (604) de l'âme en nid d'abeilles (200) en traitant au moins certaines des parois (212) de l'âme en nid d'abeilles (200) en défibrant au moins certaines des parois en nid d'abeilles (211) au niveau de leurs bords (212) de façon à limiter leur hauteur et à augmenter la largeur (w2) du bord (212) par rapport à la largeur (w1) de la partie interne de la paroi (211).

2. Procédé selon la revendication 1, comprenant l'étalonnage (604) de l'âme en nid d'abeilles (200) avant l'extension (605) de l'âme en nid d'abeilles (200).

3. Procédé selon la revendication 1, comprenant l'étalonnage (604) de l'âme en nid d'abeilles (200) après extension (605) de l'âme en nid d'abeilles (200).

4. Procédé selon l'une quelconque des revendications précédentes, ledit étalonnage (604) de l'âme en nid d'abeilles (200) comprenant le traitement d'au moins certains des bords (212) en faisant tourner des rouleaux rugueux (701).

5. Procédé selon l'une quelconque des revendications précédentes, ledit étalonnage (604) de l'âme en nid d'abeilles (200) comprenant le traitement d'au moins certains des bords (212) par des marteaux vibrants (702).

6. Procédé selon l'une quelconque des revendications précédentes, ledit étalonnage (604) de l'âme en nid d'abeilles (200) comprenant le traitement d'au moins certains des bords (212) en faisant tourner et faisant vibrer des rouleaux rugueux (703).

7. Procédé selon l'une quelconque des revendications précédentes, ledit étalonnage (604) de l'âme en nid d'abeilles (200) comprenant le traitement d'au moins certains des bords (212) par un rouleau vibrant (705) avec un revêtement rugueux rotatif.

8. Structure en nid d'abeilles comprenant :
- une âme en nid d'abeilles en papier (200) comprenant une pluralité de cellules adjacentes (201) formées entre des parois (211) ; et
- au moins une couche de recouvrement externe (202) possédant une surface liée au moyen d'un adhésif avec les bords (212) des parois (211) de l'âme en nid d'abeilles (200) ;
**caractérisée en ce que**
- au moins certaines des parois (212) de l'âme en nid d'abeilles (200) possèdent un bord (212) avec une largeur (w2) supérieure à la largeur (w1) de la partie interne de la paroi (211) et ladite structure du papier au niveau du bord (212) d'au moins certaines des parois (212) étant défibrée.
